Europäisches Patentamt

European Patent Office

Office européen des brevets

(19)

(11) Veröffentlichungsnummer: **0 004 327**
**B1**

(12) **EUROPÄISCHE PATENTSCHRIFT**

(45) Veröffentlichungstag der Patentschrift: **30.06.82**

(21) Anmeldenummer: **79100726.3**

(22) Anmeldetag: **12.03.79**

(51) Int. Cl.³: **C 08 K 5/23**

(54) Verfahren zum Pigmentieren von Kunststoffen und mit Azofarbstoff pigmentierte Kunststoffe.

(30) Priorität: **18.03.78 GB 1082978**
**18.03.78 GB 1083078**

(43) Veröffentlichungstag der Anmeldung:
**03.10.79 Patentblatt 79/20**

(45) Bekanntmachung des Hinweises auf die Patenterteilung:
**30.06.82 Patentblatt 82/26**

(84) Benannte Vertragsstaaten:
**DE FR GB IT SE**

(56) Entgegenhaltungen:
**DE - C - 566 725**
**FR - A - 1 203 865**

(73) Patentinhaber: **CIBA-GEIGY AG**
**Patentabteilung Postfach**
**CH-4002 Basel (CH)**

(72) Erfinder: **Smith, Derek Stewart Hunter, Dr.**
**11 Burnside Avenue**
**Brookfield Renfrewshire Schottland (GB)**

Courier Press, Leamington Spa, England.

## Verfahren zum Pigmentieren von Kunststoffen und mit Azofarbstoff pigmentierte Kunststoffe

Von Pigmenten für Kunststoffe, wird verlangt, dass sie thermostabil sind, nicht ausbluten und eine gute Lichtechtheit aufweisen. Im grünstichigen Gelbbereich erfüllt Pigmentgelb 3, das Monoazopigment aus diazotiertem 2 - Nitro - 4 - chloranilin und Acetoacetyl - o - chloranilid, zwar die Anforderungen bezüglich Lichtechtheit und Thermostabilität, ist jedoch wegen ungenügender Migrationsechtheit zum Pigmentieren von Kunststoffen nicht geeignet. Es ist ferner bekannt, dass Pigmentgelb 3 in Alkydnarzlacken starke brillante grünstichiggelbe Färbungen von guten Licht- und Wetterechtheit ergibt, für Alkyd-Melaminharzlacke wegen ungenügender Ueberlackierechtheit jedoch unbrauchbar ist. Weiterhin ist bekannt, dass Pigmentgelb 61, das Calciumsalz des Monoazofarbstoffes aus diazotierter 2 - Nitroanilin - 4 - sulfonsäure und Acetoacetanilid zwar eine gute Migrations- aber eine geringe Lichtechtheit und Farbstärke aufweist, selbst in der gemäss DE—OS 2.622.806 erhaltenen verbesserten Form. Auch thermohärtbare Alkyd-Melaminharzlacke enthaltend Pigmentgelb 61 sind bekannt. Sie zeigen einen ähnlichen Farbton wie die mit Pigmentgelb 3/gefärbten, jedoch eine bessere Ueberlackierechtheit jedoch eine wesentliche geringere Farbstärke.

Es ist daher überraschend, dass das Calciumsalz des Farbstoffes aus diazotierter 2 - Nitroanilin - 4 - sulfonsäure und Acetoacetyl - o - chloranilid das fast den gleichen Farbton und die gleich gute Migrationsechtheit wie Pigmentgelb 61 aufweist, gegenüber letzterem eine bedeutend bessere Lichtechtheit und Farbstärke aufweist.

Es zeigt auch eine gegenüber Pigmentgelb 3 und 61 verbesserte Hitzebeständigkeit in PVC und eine gegenüber Pigmentgelb 3 und 61 erhöhte Farbstärke in Lacken bei hervorragender Licht- und Wetterechtheit.

Die vorliegende Erfindung betrifft also die Verwendung des Calciumsalzes des Monoazofarbstoffes aus diazotierter 2 - Nitroanilin - 4 - sulfonsäure und Acetoacetyl - o - chloranilid zum Pigmentieren von Kunststoffen und die damit pigmentierten Kunststoffe.

Der Begriff "Kunststoffe" umfasst alle durch Polymerisation, Polyaddition oder Polykondensation erhältlichen hochmolekularen Produkte, insbesondere die durch Homo- oder Kopolymerisation von Verbindungen enthaltend die Vinylgruppe $CH_2=CH-$ oder die Vinylidengruppe $CH_2=CR-$ erhaltenen Polymeren. Als Beispiele seien die Homopolymeren folgender Monomeren genannt:

Olefine, wie Aethylen, Propylen, wie Isobutylen, Vinylester, wie Vinylacetat und Vinylpropionat, Vinylhalogenide, wie Vinylchlorid, Vinylfluorid, Vinylidenchlorid, Vinylidenfluorid, Tetrafluoräthylen, Hexafluoräthylen, Methacrylsäureester wie Methylmethacrylat, ferner Maleinsäureanhydrid, Acrylnitril, Styrol, Chlorstyrol, Methylstyrol, Divinylbenzol, Vinylnaphthalin, Acenaphthylen, Vinylpyridin, Vinylcarbazol, sowie Kopolymere davon, beispielsweise Aethylen-Vinylacetat-Kopolymere und ABS. Als weitere Polymere seien die Poly-p-xylylene genannt.

Die erwähnten Kunststoffe können auch die gebräuchlichen Weichmacher und Füllstoffe und Stabilisatoren enthalten.

Der Begrirf "Kunststoffe" umfasst auch alle filmbildenden Harze oder Bindemittel, wie sie in Anstrichen gebraucht werden, und wie sie beispielsweise erwähnt sind in den Lackrohstofftabellen von Karstens, 4. und 5. Auflage, Hannover 1967 und 1972 oder im Handbuch über Lackkunstharze von Sarx und Wagner, 5. Auflage München 1971 oder in Surface Coating Resin Index 1968, herausgegebenen von der British Plastics Federation und der Surface Coating Resin Manufacturer's Association.

Bevorzugte Klassen filmformender Harze sind

a) Polyester-Kondensationsharze oder Alkydharze, welche erhalten werden durch wiederholte Veresterungen mehrwertiger Alkohole mit zwei- oder mehrbasischen Carbonsäuren oder -anhydriden, vorzugsweise in Gegenwart einer langkettiger einbasischen Carbonsäuren. Als Beispiele mehrwertiger Alkohole seien genannt: Glycerin, Pentaerythrit, Trimethylolpropan, Aethylen- und Diäthylenglykol. Als zwei- und mehrwertige Carbonsäure und -anhydride kommen in Betracht: Phthalsäure, anhydrid, Isophthalsäure, Teraphthalsäure, Meleinsäure und -anhydrid, Fumarsäure, Citronensäure, Sebazinsäure, Bernsteinsäure und Acelainsäure. Als Beispiele langkettiger einbasischer Carbonsäuren seien genannt: Linolsäure, Kokosfettsäure, Pelargonsäure, Ricinolsäure, Laurinsäure, Benzoesäure, p-Tertiärbutylbenzoesäure, 2-Aethylhexansäure, sowie eine Mischung stark verzweigter Carbonsäuren mit 9—11 C-Atomen worin bis zu 93% aller Carboxylgruppen an ein quaternäres C-Atom gebunden sind, die unter den Handelsnamen Versatic 911 und Cardura erhältlich sind. Anstelle der freien Monocarbonsäuren können auch deren Ester und Gemische verwendet werden.

b) Aminoplaste, wie Harnstoff-Formaldehyd- und Melamin-Formaldehydharze. Diese Harze sind besonders geeignet in Kombination mit den oben erwähnten Alkydharzen, wobei das Molverhältnis von Alkydharz; Aminoplast 2:1 bis 4:1 betragt.

c) Thermoplastische Acrylharze, wie sie erhalten werden durch Polymerisation von Acrylsäure, Methacrylsäure oder deren Ester, insbesondere Methyl und Aethyl, Stearyl-, Cyclohexyl-, 2 - Aethylhexyl - 2 - Hydroxyäthyl- und 2-Hydroxypropylmethacrylat, Aethylen und Butylendimethacrylat, Trimethylolpropantrimethacrylat, Dimethylaminoäthylacrylat, Methyl-, Aethyl-, n-Butyl- und 2-Aethylhexyl-acrylat, Acrylamid und Hydroxyacrylamid.

Die thermoplastischen Acrylharze können allein oder in Kombination mit Nitrocellulose oder Vinylharzen verwendet werden. Bevorzugt sind Acrylat-Methacrylat-Kopolymere oder Mischungen von Poly-methyl- oder Poly-butylmethacrylaten mit Styrol-Kopolymerisaten, wie Styrol-Vinyl-Kopolymeren oder Polyvinylacetat.

d) Hitzehärtbare Acrylharze, welche, beim Einbrennen vernetzen. Diese Harze bestehen aus relativ kurzkettigen Polymeren mit geringen Anteilen von Acrylsäuren oder von deren funktionellen Derivaten mit grösseren Mengen eines Acryl- oder Methacrylsäureesters gegebenenfalls in Mischung mit einem Vinylmonomeren, wie Styrol. Man verwendet in der Regel als Monomere die unter c) genannten Acryl- und Methacrylsäureester.

Bevorzugt sind die Polymeren der Acrylsäure und Hydroxyacrylsäure. Bevorzugte Vernetzungsmittel sind Aminoplaste, insbesondere Melaminformaldehyd-Harze.

Die erwähnten Harze enthalten die in der Lackindustrie gebräuchlichen Lösungs- und Verdünnungsmittel, wobei die Wahl des Verdünnungsmittels von der Art des Bindemittels abhängt. Bevorzugt sind aromatische und aliphatische Kohlenwasserstoffe, wie Xylole, Toluol oder White spirit, chlorierte aliphatische Kohlenwasserstoffe, wie Trichloräthylen aliphatische Alkohole, wie Butanol, Cellosolve, Methylcellosolve, aliphatische Ketone, wie Methyläthyl-keton, Ester wie Butylacetat, Cellosolveacetat, Methylcellosolveacetat, ferner methylierte Industriealkohole. Auch Mischungen der erwähnten Lösungsmittel können verwendet werden, vorzugsweise Mischungen von Xylol und Butanol.

Die Dispergierung des Pigmentes im Kunstharz erfolgt auf übliche Weise, beispielsweise durch Vermahlen des Pigmentes mit dem Binde- und Verdünnungsmittel in einer der gebräuchlichen Mühlen oder mit Hilfe eines Attritors oder eines Hochleistungsmischers. Nötigenfalls kann der Ueberzugsmasse auch ein Polymerisationsbeschleuniger, beispielsweise Cobaltnaphtenat zugegeben werden. Durch Vermischen mit andern Ueberzugsmassen kann der Farbton variiert werden.

Das Verhältnis von Pigment zu kunstharz kann, je nach Art des Kunststoffes innerhalb weiter Grenzen schwanken, und liegt in der Regel zwischen 0,1—20%. Bei lufttrocknenden Alkydharzlacken, liegt es vorzugsweise zwischen 5—15%, bei Alkydharz-Einbrennlacken zwischen 1—10% und bei thermohärtenden Acrylharzlacken zwischen 6—10% und bei Vinylharzen zwischen 0,1—5%.

In den nachfolgenden Beispielen bedeuten die Teile Gewichtsteile, und die Prozente Gewichtsprozente- und die temperatur ist in Celsiusgraden angegeben.

Beispiel 1 (Herstellung des Pigmentes)

7,8 Teile des Ammoniumsalzes von 2 - Nitroanilin - 4 - sulfonsäure werden in 75 Teilen Wasser bei 60°C gelöst und 10,6 Teile konzentrierte Salzsäure zugegeben. Die Mischung wird mit Eis auf 0° gekühlt und eine Lösung von 2,5 Teilen Natriumnitrit, gelöst in 4 Teilen Wasser, wird allmählich zugegeben. Es wird noch während 30 Minuten bei 0—5° gerührt. Dann werden 8 Teile Acetoacetyl-2-chloranilid in 100 Teilen Wasser, enthaltend 1,9 Teile Natriumhydroxid, gelöst, 1,5 Teile Natriumacetat und 2,25 Teile frisch gefällten Kalk zugegeben, dann wird der pH durch Zugabe von 33% iger Essigsäure auf 7,0 gestellt. Die erhaltene Dispersion wird während 1 Stunde bei pH 7,0 bei Raumtemperatur gerührt, wobei der pH-Wert auf 4—5 fällt. Man rührt eine weitere Stunde bei diesem pH, erhitzt dann unter Rühren auf 80° und rührt weitere 15 Minuten, bei dieser Temperatur. Dann wird filtriert, der Filterkuchen wird mit kaltem Wasser chloridfrei gewaschen und bei 50—60°C getrocknet.

Beispiel 2 (Anwendung in Polyäthylen)

0,2 g des nach Beispiel 1 hergestellten Pigmentes, 1 g Titandioxyd (Rutil) und 100 g LD-Polyäthylengranulat werden in einer Trommel gemischt und das Gemisch anschliessend auf dem Mischwalzwerk bei 130° verarbeitet. Die Masse wird heiss zu Platten verpresst oder in der Strangpresse verformt. Die Platten zeigen einen starken grünstichig-gelben Farbton. Die Farbstärke ist grösser und die Licht- und Hitzestabilität ist besser als bei Verwendung von Pigmentgelb 61.

Beispiel 3 (Anwendung in PVC)

67 g Polyvinylchlorid-Pulver (Suspensionspolymerisat), 33 g Dioctylphthalat, 2 g Dibutylzinndilaurat, 0,3 g eines Stabilisators auf Phosphatbasis und 0,7 g des nach Beispiel 1 hergestellten Pigmentes werden vermischt und auf dem 160° heissen Mischwalzwerk während 15 Minuten verarbeitet. Anschliessend wird auf dem Kalander eine Folie von 0,4 mm Dicke hergestellt. Sie ist in einem reinen grünstichig-gelben Farbton gefärbt. Die Färbung ist hitzebeständiger als eine mit Pigmentgelb 61 erhaltene.

Beispiel 4 (Anwendung in Polystyrol)

0,2 g des nach Beispiel 1 hergestellten Pigments und 100 g Polystyrolgranulat werden gemischt und auf dem Mischwalzwerk bei 130°C verarbeitet, bis die Färbung homogen erscheint. Die Masse wird alsdann zwischen verchromten Platten bei 180° zu Platten verpresst. Die grünstichig-gelbe Färbung der Platten ist gut lichtecht. Man kann die Pigmentierung anstatt auf dem Mischwalzwerk auch in der Strangpresse vornehmen. Ferner ist est möglich, die homogen pigmentierte Masse zu granulieren und bei 200°C in der Spritzgussmaschine zu verformen.

Beispiel 5 (Anwendung in ABS)

13,5 Teile des gemäss Beispiel 1 erhaltenen Pigmentes werden mit 20 Teilen TiO$_2$ und 100 Teilen ABS- Granulat während 5 Minuten in einer Schwabenthan Walzenmühle vermischt, (Walzenabstand 0,3 mm). Dann werden weitere 900 Teile ABS allmählich zugegeben. Nach der Zugabe des letzten ABS wird noch während 5 Minuten gewalzt. Der Walzenabstand wird nun auf 3 mm vergrössert und das Fell kalandriert. Das pigmentierte ABS wird dann bei 200° in der Spritzgussmaschine oder bei 180°C durch Pressen verformt. Man erhält brillante grünstichiggelbe Färbungen, die gegenüber Pigmentgelb 61 mehr als doppelte Farbstärke zeigen.

Beispiel 6 (Lufttrocknender Alkydharzlack)

16 Teile des Pigments gemäss Beispiel 1 werden mit 32 Teilen eines Sojabohnenöl-Pentaerythrit-Alkydharzes und 21 Teilen White spirit während 16 Stunden gemahlen. Zur erhaltenen Mischung gibt man in zwei Portionen weitere 77 Teile des obigen Alkydharzes und 3,84 Teile Kobaltnaphtenat. Man erhält brillante farbstarke grünstichig-gelbe Lackierungen von sehr guter Licht- und Wetterechtheit.

Beispiel 7 (Alkyd-Melamin-Einbrennlack)

60 Teile einer 60 %igen Lösung eines nichttrocknenden Alkydharzes in Xylol (Handelsname Beckosol 27—320 der Firma Reichhold-Albert-Chemie), 36 Teile einer 50 %igen Lösung eines Melamin-Formaldehyd-Harzes in einem Alkohol-Aromaten-Gemisch (Handelsname Super-Beckamin 13—501 der Firma Reichhold-Albert-Chemie), 2 Teile Xylol und 2 Teile Methylcellosolve werden vermischt und 100 Teile dieses Gemisches werden mit Hilfe eines Rührers zu einer homogenen Lacklösung verrührt.

95 g des so erhaltenen Klarlackes und 5 g Pigment gemäss Beispiel 1 werden in einer Kugelmühle während 72 Stunden gemahlen. Der eingefärbte Lack wird dann nach üblicher Spritzmethode auf Blech appliziert und 30 Minuten bei 120°C eingebrannt. Man erhält eine grünstichig-gelbe Lackierung von guter, Licht-, Wetter- und Ueberlackierechtheit und guter Thermostabilität. Es ist kein Ausblühen des Pigmentes feststellbar.

Verwendet man anstelle des erfindungsgemässen Pigmentes Pigmentgelb 3, so erhält man einen Film von schlechterer Ueberlackierechtheit wobei ausserdem ein Ausblühen des Pigmentes an der Filmoberfläche feststellbar ist.

Beispiel 8 (Lufttrocknender Acrylharzlack)

9 Teile des Pigments gemäss Beispiel 1 werden mit 22,5 Teilen einer 60 %igen Lösung eines Hydroxyacrylharzes in Xylol/n-Butanol 1:1 (Handelsname Epok D. 1202) während 40 Stunden in der Kugelmühle gemahlen. Zur erhaltenen Mischung gibt man weitere 30 Teile des Hydroxyacrylharzes unter Rühren. Es wird nochmals während 30 Minuten in der Kugelmühle gemahlen und hernach nochmals 20,7 Teile Hydroxyacrylharz zugegeben. Nach weiterem viertelstündigem Mahlen erhält man einen Lack, der nach dem Trocknen einen stark grünstichiggelb gefärbten Film von guter Hitzestabilität, Licht-, Wetter- und Ueberlackierechtheit.

Beispiel 9 (thermohärtender Acrylharzlack)

9 Teile des Pigmentes gemäss Beispiel 1 und 22,5 Teile einer 60 %igen Lösung eines thermohärtenden Hydroxyacrylharzes in Xylol/n-Butanol 1:1 (Handlesname Dynocryl H-2103) und 58,5 Teilen Xylol gemahlen. Zu dieser Mischung gibt man weitere 30 Teile des Hydroxyacrylharzes und mahlt weitere 30 Minuten. Hernach gibt man 22,5 Teile einer 60 %igen Lösung eines butylierten Melamin-Formaldehydharzes in Isobutanol zu. Es wird während 15 Minuten weitergemahlen und das Gemisch nach dem Ausladen während 24 Stunden bei Zimmertemperatur stehen gelassen. Mit diesem Lack erhält man nach dem Spritzen auf Blech und Einbrennen bei 120—130° einen brillanten grünstichiggelben Film von guter Hitzestabilität, Licht-, Wetter, Ueberlackier- und Ausblühechtheit.

**Patentansprüche**

1. Verfahren zum Pigmentieren von Kunststoffen, dadurch gekennzeichnet, dass man als Pigment das Calciumsalz des Monoazofarbstoffes aus diazotierter 2 - Nitroanilin - 4 - sulfonsäure und Acetoacetyl - o - chloranilid verwendet.

2. Verfahren gemäss Anspruch 1, dadurch gekennzeichnet, dass der Kunststoff ein Homo- oder Kopolymerisat einer Verbindung enthaltend eine Vinyl- oder Vinylidengruppe ist.

3. Verfahren gemäss Anspruch 1 und 2, dadurch gekennziechnet, dass der Kunststoff Polyvinylchlorid, Polyäthylen oder Polystyrol ist.

4. Verfahren gemäss Anspruch 1, dadurch gekennzeichnet, dass der Kunststoff ein filmbildendes Harz ist.

5. Verfahren gemäss Anspruch 4, dadurch gekennzeichnet, dass das filmbildende Harz ein Polyester-, Alkyd-, Aminoplast-, thermohärtendes oder thermoplastisches Acrylharz ist, wobei letzteres mit Nitrocellulose oder einem Vinylharz kombiniert sein kann.

6. Verfahren gemäss Anspruch 4 und 5, dadurch gekennzeichnet, dass das filmbildende Harz eine Mischung eines Alkydharzes mit einem Aminoplast in Molverhältnis von 2:1 bis 4:1 ist.

7. Verfahren gemäss Anspruch 4, 5 und 6, dadurch gekennzeichnet, dass das filmbildende Harz mit einem Lösungs- oder Verdünnungsmittel vermischt ist.

8. Verfahren gemäss Anspruch 7, dadurch gekennzeichnet, dass das Lösungs- oder Verdünnungsmittel ein aliphatischer oder aromatischer Kohlenwasserstoff, ein chlorierter aliphatischer Kohlenwasserstoff, ein aliphatischer Alkohol, Keton oder Ester oder ein Gemisch davon ist.

9. Kunststoffe enthaltend als Pigment das Calciumsalz des Monoazofarbstoffes aus diazotierter 2 - Nitroanilin - 4 - sulfonsäure und Acetoacetyl - o - chloranilid.

## Claims

1. A process for pigmenting a plastics mass, wherein there is used as pigment the calcium salt of the monoazo dyestuff obtained from diazotised 2 - nitroaniline - 4 - sulfonic acid and acetoacetyl - o - chloroanilide.

2. A process according to claim 1, wherein the plastics mass is a homopolymer or copolymer of a compound containing a vinyl or vinylidene group.

3. A process according to claim 1, wherein the plastics mass is polyvinyl chloride, polyethylene or polystyrene.

4. A process according to claim 1, wherein the plastics mass is a film-forming resin.

5. A process according to claim 4, wherein the film-forming resin is a polyester, alkyd, aminoplast, thermosetting or thermoplastic acrylic resin, which latter may be combined with nitrocellulose or a vinyl resin.

6. A process according to either of claims 4 or 5, wherein the film-forming resin is a mixture of an alkyd resin with an aminoplast in the molar ratio of 2:1 to 4:1.

7. A process according to any one of claims 4, 5 or 6, wherein the film-forming resin is mixed with a solvent or diluent.

8. A process according to claim 7, wherein the solvent or diluent is an aliphatic or aromatic hydrocarbon, a chlorinated aliphatic hydrocarbon, an aliphatic alcohol, an aliphatic ketone or an ester, or a mixture thereof.

9. A plastics mass containing, as pigment, the calcium salt of the monoazo dyestuff obtained from diazotised 2 - nitroaniline - 4 - sulfonic acid and acetoacetyl - o - chloroanilide.

## Revendications

1. Procédé pour pigmenter des matières plastiques, caractérisé en ce qu'on utilise, comme pigment, le sel calcique du colorant mono-azoïque obtenu à partir du diazoïque de l'acide nitro-2 aniline-sulfonique-4 et de l'o-chloranilide de l'acide acétylacétique.

2. Procédé selon la revendication 1, caractérisé en ce que la matière plastique est un homopolymère ou un copolymère d'un composé contenant un radical vinyle ou vinylidène.

3. Procédé selon l'une des revendications 1 et 2, caractérisé en ce que la matière plastique est le polychlorure de vinyle, le polyéthylène ou le polystyrène.

4. Procédé selon la revendication 1, caractérisé en ce que la matière plastique est une résine feuillogène.

5. Procédé selon la revendication 4, caractérisé en ce que la résine feuillogène est une résine polyester, une résine alkyde, une résine aminoplaste, ou une résine acrylique thermodurcissable ou thermoplastique, cette dernière pouvant être associée à de la nitrocellulose ou à une résine vinylique.

6. Procédé selon l'une des revendications 4 et 5, caractérisé en ce que la résine feuillogène est un mélange d'une résine alkyde et d'un aminoplaste dans un rapport molaire compris entre 2:1 et 4:1.

7. Procédé selon l'une quelconque des revendications 4, 5 et 6, caractérisé en ce que la résine feuillogène est mélangée avec un solvant ou un diluant.

8. Procédé selon la revendication 7, caractérisé en ce que le solvant ou diluant est un hydrocarbure aliphatique ou aromatique, un hydrocarbure aliphatique chloré, un alcool aliphatique, un cétone ou un ester, ou un mélange de ces substances.

9. Matières plastiques contenant, comme pigment, le sel calcique du colorant mono-azoïque dérivant du diazoïque de l'acide nitro-2 aniline-sulfonique-4 et de l'o-chloranilide de l'acide acétylacétique.